# EUROPEAN PATENT APPLICATION

(11) **EP 2 916 528 A1**
(43) Date of publication of application: **09.09.2015**
(21) Application number: 13850073.1
(22) Date of filing: 02.08.2013
(51) Int. Cl.: H04M 1/2745, H04M 1/725

(54) **CONTACT INFORMATION GROUPING METHOD AND APPARATUS**

(30) Priority: 01.11.2012 CN 201210430240
(71) Applicant: Huizhou TCL Mobile Communication Co., Ltd., Huizhou, Guangdong 516006 (CN)
(72) Inventor: HOU, Kefen, HuiZhou Guangdong 516006 (CN); YE, Xinyao, HuiZhou Guangdong 516006 (CN); HU, Yajun, HuiZhou Guangdong 516006 (CN)
(74) Representative: Petraz, Gilberto Luigi
(86) International application number: PCT/CN2013/080722
(87) International publication number: WO 2014/067305

(57) **Abstract**

A method and a device for processing contact information group are proposed. The method includes: entering a contact interface according to a first operation command from an user; displaying a contact in a contact list corresponding to a focus group as picked according to a second operation command from the user; and identifying a targeted group of the contact and moving the contact to the targeted group according to a third operation command from the user. By using the present invention, the user can rapidly groups all the contacts through a single operation interface.

## Description

### BACKGROUND OF THE INVENTION

### 1. Field of the Invention

The present invention relates to a mobile terminal field, more particularly, to a method and a device for processing contact information groups.

### 2. Description of the Prior Art

With development of mobile communication technology and living standard, various kinds of mobile terminals, like mobile phones, have been popular to become an indispensible communication device in daily life.

In everyday life, people use a mobile phone to store a plurality of contacts. The users have to group the contacts in the mobile phone for conveniently managing and quickly searching some contacts when there are a plenty of the contacts. A conventional method for grouping contact information in a mobile phone in the prior art is: presetting a plurality of groups, entering a contact interface, picking up a contact, entering a contact editing option, choosing a group to add the contact into the correspondent group, and finally returning to the contact interface to pick up other contacts who need to group, and repeating the above steps. It is inconvenient for users that the group operating steps are tedious to switch among interfaces repeatedly, especially grouping a plenty of contacts.

Therefore, the technology in the prior art is necessary to improve and develop.

### SUMMARY OF THE INVENTION

The present invention solves a technical problem in the prior art by providing a method for processing contact information group and a device thereof so that users are capable of rapidly grouping all contacts in the same operation interface to simplify operation and increase group efficiency.

According to the present invention, a method for processing contact information group, comprises: setting up a contact database storing contact information, group information and a association list recording a relationship between groups and correspondent contacts; saving model data corresponding to a drag operation gesture and associating the drag operation gesture with a contact group trigger command; entering a contact interface according to a first operation command from an user, wherein the first operation command is used for enabling the contact interface; displaying a contact in a contact list corresponding to a focus group as picked according to a second operation command from the user, wherein the second operation command comes from that long pressing the contact by the user; and identifying a targeted group of the contact and moving the contact to the targeted group according to a third operation command from the user, wherein the third operation command comes from a drag operation gesture by the user. A contact group list and the contact list are displayed in the contact interface in sequence. The contact group list is pre-stored and the contact list corresponds to the focus group. The contact group list is displayed on one side of the contact interface, and the contact list corresponding to the focus group is displayed on the other side of the contact interface.

In one aspect of the present invention, the step of identifying the contact targeted group comprises: identifying the targeted group according to the drag operation gesture corresponding to the third operation command, wherein the third operation command corresponds to the drag operation gesture dragging the contact by the user; determining if the targeted group accepts the contact or not, wherein the targeted group accepts the contact when the a group identification number corresponding to the contact in the targeted group does not match a group identification number corresponding to the current contact group; and moving the contact to the targeted group when the targeted group accepts the contact.

In another aspect of the present invention, the contact information comprises contact identification numbers, contact names and contact head images. The group information comprises group identification numbers and group names. The association list comprises a correspondent one-to-many relationship between the group identification numbers and the contact identification numbers.

In yet another aspect of the present invention, the step for displaying the contact in the contact list corresponding to the focus group as picked comprises: identifying a contact picked by a user based on the second operation command, wherein the second operation command is that the user long presses the contact in the contact list corresponding to the focus group; changing display brightness of the contact in the contact interface; and generating a copy of the contact head image and displaying the copy rotated at a predetermined angle.

According to the present invention, a method for processing contact information group, comprises: entering a contact interface according to a first operation command from an user, wherein the first operation command is used for enabling the contact interface; displaying a contact in a contact list corresponding to a focus group as picked according to a second operation command from the user, wherein the second operation command comes from that long pressing the contact by the user; and identifying a targeted group of the contact and moving the contact to the targeted group according to a third operation command from the user, wherein the third operation command comes from a drag operation gesture by the user.

In one aspect of the present invention, a contact group list and the contact list are displayed in the contact interface in sequence, the contact group list is pre-stored and the contact list corresponds to the focus group.

In another aspect of the present invention, before a step of entering the contact interface, the method further comprises:
setting up a contact database storing contact information, group information and a association list recording a relationship between groups and correspondent contacts; and
saving model data corresponding to drag operation gestures and associating the drag operation gesture with a contact group trigger command.

In another aspect of the present invention, the step of identifying the contact targeted group comprises: identifying the targeted group according to the drag operation gesture corresponding to the third operation command, wherein the third operation command corresponds to the drag operation gesture dragging the contact by the user; determining if the targeted group accepts the contact or not, wherein the targeted group accepts the contact when the a group identification number corresponding to the contact in the targeted group does not match a group identification number corresponding to the current contact group; and moving the contact to the targeted group when the targeted group accepts the contact.

In still another aspect of the present invention, the contact information comprises contact identification numbers, contact names and contact head images. The group information comprises group identification numbers and group names. The association list comprises a correspondent one-to-many relationship between the group identification numbers and the contact identification numbers.

In still another aspect of the present invention, the step for displaying the contact in the contact list corresponding to the focus group as picked comprises: identifying a contact picked by a user based on the second operation command, wherein the second operation command is that the user long presses the contact in the contact list corresponding to the focus group; changing display brightness of the contact in the contact interface; and generating a copy of the contact head image and displaying the copy rotated at a predetermined angle.

In yet another aspect of the present invention, the contact group list is displayed on one side of the contact interface, and the contact list corresponding to the focus group is displayed on the other side of the contact interface.

According to the present invention, a device for processing contact information group, comprises: a contact control module for entering a contact interface according to a first operation command from an user and for displaying a contact in a contact list corresponding to a focus group as picked according to a second operation command from the user, wherein the first operation command is used for enabling the contact interface, and the second operation command comes from that long pressing the contact by the user; and a group control module for identifying a targeted group of the contact and moving the contact to the targeted group according to a third operation command from the user, wherein the third operation command comes from a drag operation gesture by the user.

In one aspect of the present invention, a contact group list and the contact list are displayed in the contact interface in sequence, the contact group list is pre-stored and the contact list corresponds to the focus group.

In another aspect of the present invention, the device further comprises an arrangement module for setting up a contact database storing contact information, group information and a association list recording a relationship between groups and correspondent contacts, for saving model data corresponding to drag operation gestures, and for associating the drag operation gesture with a contact group trigger command.

In another aspect of the present invention, the device further comprises: an identifying unit for identifying the targeted group according to the drag operation gesture corresponding to the third operation command, wherein the third operation command corresponds to the drag operation gesture dragging the contact by the user; a determining unit for determining whether the targeted group accepts the contact or not, wherein the targeted group accepts the contact when the a group identification number corresponding to the contact in the targeted group does not match a group identification number corresponding to the current contact group; and a grouping unit for moving the contact to the targeted group when the targeted group accepts the contact.

In another aspect of the present invention, the contact information comprises contact identification numbers, contact names and contact head images. The group information comprises group identification numbers and group names. The association list comprises a correspondent one-to-many relationship between the group identification numbers and the contact identification numbers.

In still another aspect of the present invention, the contact control module comprises: a first control unit for identifying a contact picked by a user based on the second operation command, wherein the second operation command is that the user long presses the contact in the contact list corresponding to the focus group; and a second control unit for changing display brightness of the contact in the contact interface, and for generating a copy of the contact head image and displaying the copy rotated at a predetermined angle.

In yet another aspect of the present invention, the contact group list is displayed on one side of the contact interface, and the contact list corresponding to the focus group is displayed on the other side of the contact interface.

The present invention provides a method and a device for processing contact information group to group contacts quickly through simple touch screen drag operation gestures. If the user wants to move the contacts in the current group to another group, the user just picks up and drags the correspondent contact head image to the correspondent position of a targeted group with touch screen operation gestures. The present invention adds a new function to a mobile phone: rapidly grouping contacts in the same operating interface which means it not only quickly groups contacts who are not grouped also changes or cancels grouping the grouped contacts. Therefore, it is convenient for the user to not need to switch among interfaces.

### BRIEF DESCRIPTION OF THE DRAWINGS

Fig. 1 is a diagram of a contact database applied in a method of processing a contact information group in the present invention.
Fig. 2 is a flowchart of a method of processing contact information group according to the embodiment of the present invention.
Fig. 3 is a diagram of a contact interface according to the embodiment of the present invention.
Fig. 4 is a flowchart of a method of processing the contact information group that determining if a targeted group is valid or not according to the embodiment of the present invention.

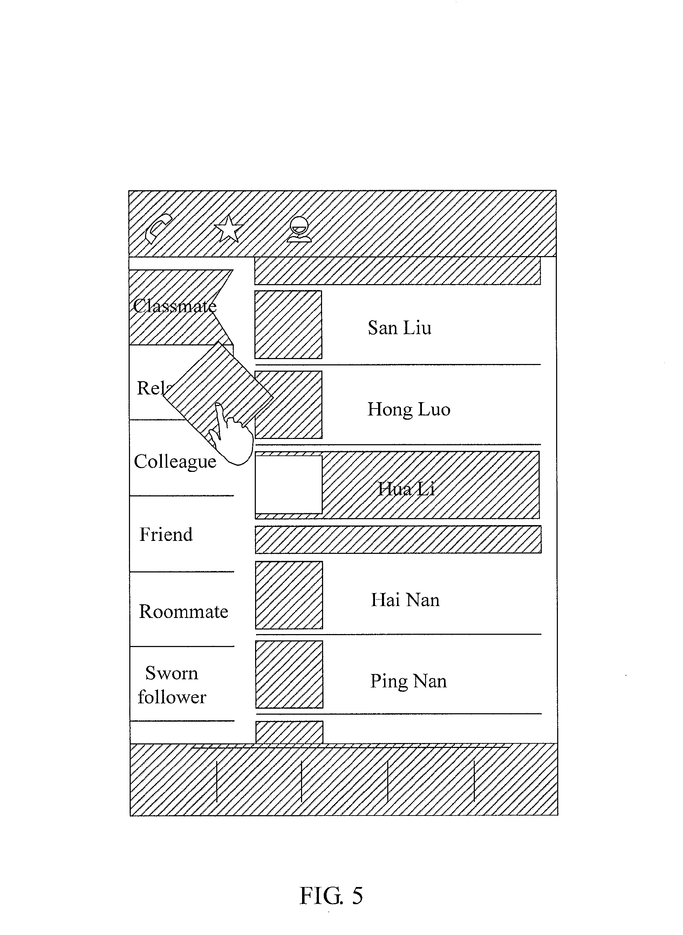

Fig. 5 is a specific flowchart of a method of processing the contact information group according to the embodiment of the present invention.
Fig. 6 is a contact database applied in the method of processing contact information group after the grouping operation according to the embodiment of the present invention.
Fig. 7 is a block diagram of the contact information group processing device according to the embodiment of the present invention.
Fig. 8 is a block diagram of a contact control module of the contact information group processing device according to the embodiment of the present invention.
Fig. 9 is a block diagram of a group control module of the contact information group processing device according to the embodiment of the present invention.

### DETAILED DESCRIPTION OF THE PREFERRED EMBODIMENTS

In order to illustrate the technique and effects of the present invention, a detailed description will be disclosed by the following disclosure in conjunction with figures. It is noted that the same components are labeled by the same number.

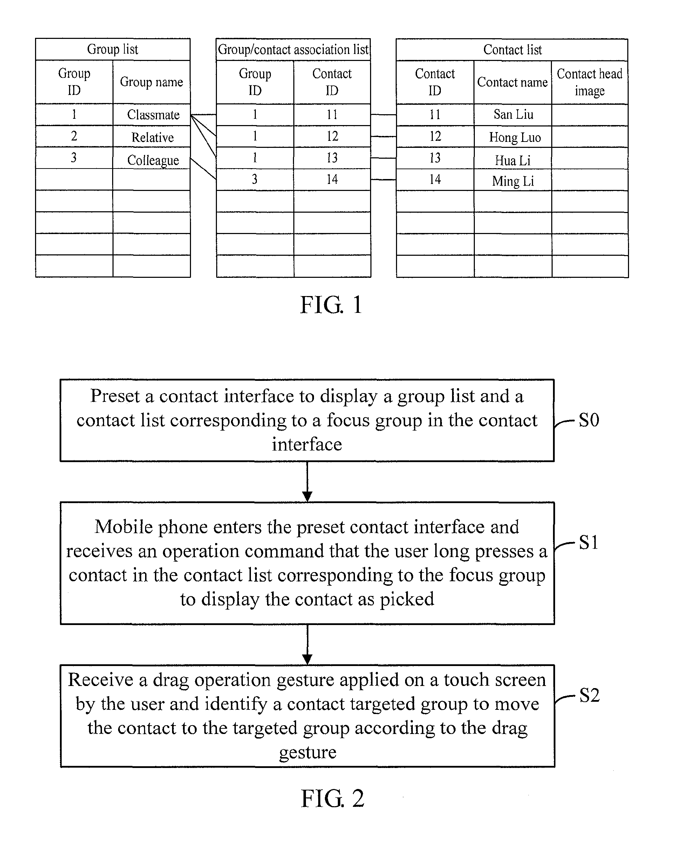

The method for contact information group processing in the present invention pre-provides a contact database for storing contact information, group information and association list between the group and the correspondent contacts. As Fig. 1 shows, the contact information comprises contact identity (ID), contact name and contact head image, the group information comprises group ID and group name, and the association list between the group and the correspondent contacts comprises a correspondent one-to-many relationship between the group ID and the contact ID.

When it needs to set up a new group, the user enters and stores a group name, the system automatically generates a correspondent group ID and saves the group name and the correspondent group ID in a group list. When the user chooses a contact from the contact list to add into the new group, the system simultaneously saves the group ID and the chosen contact ID into the association list between the group and the correspondent contacts.

Furthermore, it needs to pre-store a model data corresponding to a touch screen drag operation gestures in the system and links the drag operation gestures and a contact group trigger command. In the embodiment, the drag operation gestures for grouping is upper left/ lower left/ left slipping.

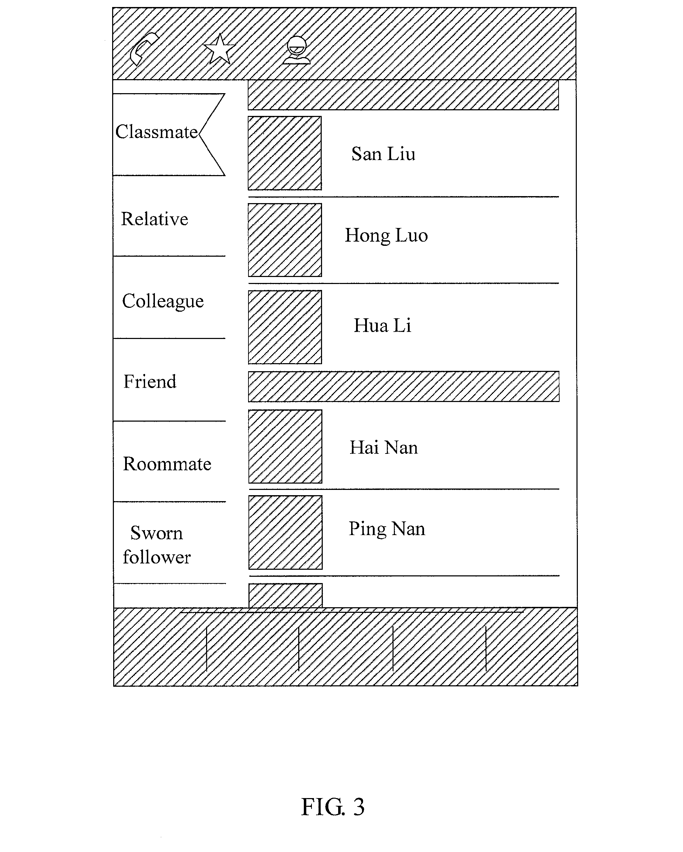

Based on the embodiment, when the user groups contacts, as Fig. 2 illustrates, the method for contact group processing of the embodiment comprises the following steps:
S0: presetting a contact interface so that the group list in the contact database and the contact list corresponding to a focus group (i.e. the group in activation state displays the contacts in the group to the user) are simultaneously displayed in the contact interface, i.e. a contact group list and the contact list are displayed in the contact interface in sequence, the contact group list is pre-stored, and the contact list corresponds to the focus group. In the embodiment, the set contact interface is: the group list is displayed on one side (like the left side) of the contact interface in sequence, and the focus group is displayed on the other side (like the right side) of the contact interface in sequence. As Fig. 3 shows, the focus group in Fig. 3 is "classmate" group, and the right side of the contact list interface is the contact list corresponding to the "classmate" group. In the meantime, if the user switches the group on the left side, which means to change the focus group, the contact list on the right side changes correspondently. In addition, both the group list on the left side of the interface and the contact list corresponding to the focus group on the right side of the interface independently pull up and down to display much information.
S1: receiving the first operation command that enables a contact interface for entering a preset contact interface, receiving the second operation command that long presses a some contact in the contact list corresponding to the focus group for controlling the some contact to show as picked, i.e. entering the contact interface according to the first operation command which enables a contact interface, and displaying the contact in the contact list corresponding to the focus group as picked based on the second operation command which long presses the contact. In the embodiment, the control that displaying the contact as picked is that changing display brightness of the correspondent contact in the contact interface, simultaneously generating a copy of the contact head image and rotating and displaying the copy at a predetermined angle, specifically rotating and displaying the head image at a predetermined angle (like 45°).
S2: receiving the third operation command corresponding to a touch drag operation gesture and moving the contact to the targeted group identified by the drag operation gesture, i.e. identifying the contact targeted group based on the third operation command, corresponding to the drag operation gesture, and moving the contact to the targeted group. Preferably, the step further comprises a deterministic process for targeted groups, i.e. determining the targeted group to accept the contact or not. It determines the targeted group to not to accept the contact if the group ID of the targeted group is equal to the original contact group ID, which means a group identification number corresponding to the contact accepted in the targeted group is unequal to a group identification number corresponding to the current contact group, otherwise, it determines the targeted group to accept the contact. It moves the contact to the targeted group in the case that the targeted group accepts the contact, otherwise, it releases a previous operation to back to the original interface.

Preferably, S2 also comprises a standard that determining if the current gesture satisfies a stored drag operation gesture for grouping. Specifically, it determines by logical drag sequences (toward upper left/ lower left/ left slipping). It determines the current operation gesture to satisfy the standard that the drag operation gesture for grouping only when it detects changes of touch position in a touch screen according to the logical sequence (toward upper left/ lower left/ left slipping).

In detail, the following is a specific arrangement process of the contact interface in S0:
Firstly, arranging a large drag region view View, named DragLayer, in the whole interface. It sets up a standard list component ListView, for displaying group lists, on the left side of the DragLayer region, named Left ListView. It sets up another standard list component ListView, for displaying contact lists in the current group, on the right side of the DragLayer region, named Right ListView. The two ListView are set up in left and right so that the group list and the contact list, corresponding to the current group, display in the same interface to assure to conveniently and rapidly drag contacts in one group to another group.
Secondly, it loads and displays the group list on the left side of the interface when entering the contact interface. In detail, it enables a thread by asynchronous mode to query group information from the contact database and stores the result in the list GroupList, the correspondent GroupList [0] = {group ID=1, group name ="Classmate"}, GroupList [1] ={group ID=2, group name="Relative"}, GroupList [2]={group ID=3, group name="Colleague"} as the contact interface in Fig. 3 shows, and generates display view View corresponding to every data in the list GroupList, for instance, the display view View corresponding to GroupList [1] is " Relative". And then, it adds all views View corresponding to the list GroupList to the standard list component on the left side of DragLayer, named Left ListView, to achieve downard arrangement view effect, and records the position in the screen which all views View, corresponding to the list GroupList, into a list LocalList, in the embodiment, LocalList[0]={group ID=1, view View= "Classmate", position={Left=10, Up=100, Down=150, Right=80}}, LocalList[1]={group ID=2, view View="Relative", position={Left=10, Up=150, Down=200, Right=80}}, LocalList[2]={group ID=3, view View="Colleague", position={Left=10, Up=200, Down=250, Right=80}}.

Finally, it further loads the contact list corresponding to the current group when the group list has been loaded. In detail, if the user chooses to locate the first position of the group list Left ListView (or by default)to get a correspondent group group ID=1, and then searches the contact database based on the group ID to have all contact information in group ID=1 through the group and the association list corresponding to contacts and the contact list, and stores the result in the list ContactList, according to the contact database in Fig. 1 shows, the ContactList[0]={group ID=1, contact ID=11, contact name=" San Liu "}, ContactList[1]={group ID=1, contact ID=12, contact name="Hong Luo"}, ContactList[2]={group ID=1, contact ID=13, contact name="Hua Li"}. A contact view View is generated based on the list ContactList. The contact view View comprises two sub-views View, one is head image icon, and the other is text view for displaying contact names. And then it adds the contact views View to RightListView on the right side of the contact interface to achieve the effect that displaying downward arrangement. At this point, the load and display of the contact interface is finished.

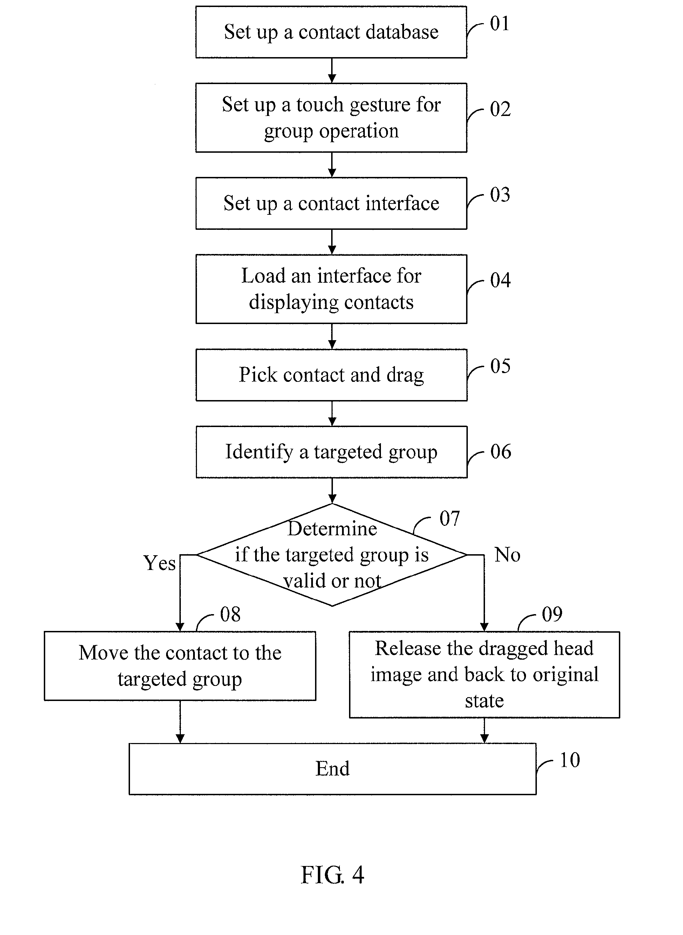

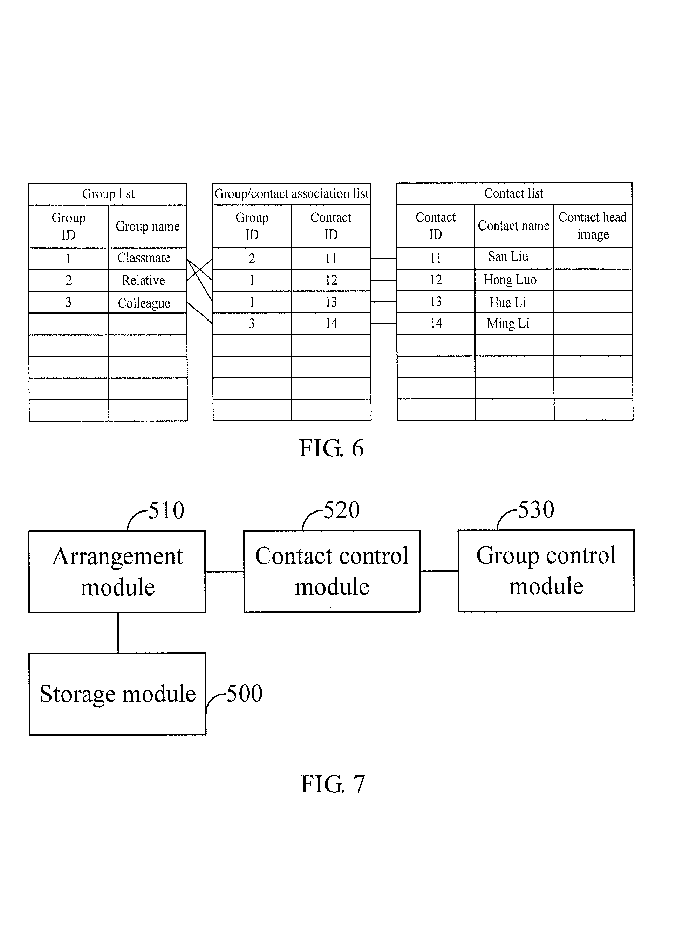

Specifically, the following is the description of practical process of the method for the contact information group process in the present invention in conjunction with the embodiment in Fig. 4. The method comprises the following steps:
01: setting up a contact database, and the detail has been described above.
02: storing a touch gesture for group operation and associating the touch gesture with a grouping trigger command, and it associates the user touch drag operation gesture with the grouping trigger command in a contact interface.
03: setting up a contact interface for displaying a group list and a correspondent contact list in the same interface.
04: loading and displaying the correspondent group list and contact list when entering the contact interface.
05: receiving the user touch operation to drag a picked contact. The detail is that the user enters the contact interface, long presses a contact in the contact list region, and the device receives the long press event in the Right ListView by the user finger. It gets a position coordinate pl(x,y) pressed by the finger first and gets the picked contact according to the position, stores the contact ID and the current group ID thereof in the CurrentContact, like long pressing the contact " San Liu " and CurrentContact={contact ID=11, group ID=1}, and then creates a head image icon copy and simultaneously contra-rotates the copy at a predetermined angle (like 45°) to display according to a contact head image icon from the contact view View, and finally put the head image icon copy to the position pl(x,y) in the DragLayer to be a sub-view of DragLayer. The effect in the correspondent interface is that when the user long presses and sticks to a contact, the DragLayer generates a correspondent contact head image icon copy according to the long press event and rotates at a predetermined angle (like 45°) to display, and acquires the finger touch position p2(x,y) in the moving event in real-time and moves the head image icon copy to the position p2(x,y) to display so that the head image icon copy moves with the user finger.
06: identifying the contact targeted group which is a some group in a group list region on the left side of the contact interface, according to the user drag operation gesture. The step that identifies a targeted group is that when the user moves the finger to drag the head image icon copy, it triggers the DragLayer moving event to acquire the finger position p2(x,y) in the moving event, and when it detects that finger stops moving, it identifies the correspondent group on the position p2(x,y) as the targeted group according to the position p2(x,y). The specifically identifying method is that first it iterates a list about the group position LocalList to determine if the position p2(x,y) is where the list LocalList records, which means it determines if the final position of the finger is in the group list region on the left side or not. It identifies the group in the LocalList corresponding to the position p2(x,y) as the picked contact targeted group if the position p2(x,y) is in the group list region. For instance, it iterates the list LocalList to find out LocalList[1]={group ID=2 , group view View="Relative", position={Left=10, Up=150, Down=200, Right=80}} if p2=(20, 160), i.e. x=20, y=160 because x=20 is in the range of Left=10 and Right=80 and y=160 is in the range of Up=150 and Down=200. Therefore, it is capable of identifying the group "Relative" as the contact targeted group, and then recording the targeted group CurrentTarget="Relative". The correspondent interface effect is that the user drag to move the head image icon copy of the contact rotated at a predetermined angle (like 45°) to acquire the position coordinate of the finger in real-time to determine if the final position of the finger is in the group list region on the left side. If it is in a region of a some group view, it further determines if the group is valid group or not. If not, go to step 09 that releases the head image icon copy of the contact to back to the interface before the touch operation.
07: determining if the targeted group is valid group or not, which means to determine if the targeted group is the current contact group or not. It only determines the targeted group as valid group in the case that the targeted group is not the current contact group so that it highlights the targeted group to indicate that the contact is movable to the targeted group, and then go to step 08, otherwise go to step 09.
   The specific determining method is to detect if the group ID of the contact is equal to the group ID of the targeted group or not. If it is, it determines the targeted group as invalid, otherwise, it determines the targeted group as valid. For instance, it acquires the group ID of the contact = 1 according to the list CurrentContact={ contact ID=11, group ID=1} corresponding to the current dragging contact, and it acquires the group ID of the contact = 2 based on the list LocalList[1]={group ID=2, view="Relative" group view View, position={Left=10, Up=150, Down=200, Right=80}}, therefore, it determines the targeted group "Relative" as valid. In hence, the contact "San Liu" is movable to the targeted group "Relative".
08: moving the picked contact to the targeted group, refreshing the interface and renewing the group list and the correspondent contact list when the targeted group is valid. Go to step 10.
   The detail is that it implements the operation of moving the contact when it detects that the user releases the finger from the position of the targeted group. The step comprises two operation. Firstly, it moves the contact head image icon copy to the central position of the targeted group view in parallel and zoom-ins the icon to disappear in the meantime. Secondly, it updates the contact database that not only deleting the contact and the originally correspondent group information from the original group and the association list corresponding to the contact, also adding the contact ID and the targeted group ID to the group and the association list corresponding to the contact. The updated contact database is shown in Fig. 6. The effect in the operation interface is that it automatically aligns the contact head image icon copy to the central area of the targeted group view and slowly zoom-outs the copy to disappear in the meantime. Therefore, the contact is no longer displayed in the contact list corresponding to the current group.
09: releasing the contact head image icon copy, releasing the picked contact, and go back to the interface before touch operation. Go to step 10.
10: operation finishes.

Therefore, in the embodiment, a touch screen slip detection module coupled to a central process unit detects touch screen operation commands (the first, the second and the third operation commands) from the user to call the stored contact database to specially call the picked contact head image icon and attached correspondent information in the preset contact interface, comprising a group list region and a new contact list corresponding to the group, through identified drag gestures. Therefore, the head image icon and correspondent information move to the group list region on the left side of the interface with the operation gesture. When the user enters the group interface and clicks one some contact head image, the head image icon is highlighted. When the user moves the finger, a contact head image icon copy is generated and displayed in rotation. The copy moves with the drag gesture in the screen until the finger is detected to stop moving and the copy has concretely located at a some position of a group, and the contact is automatically grouped to correspondent group when the user release the finger. In hence, it achieves to rapidly group contacts in the same operating interface with not need to switch among interfaces. Therefore, it is simply used, high efficient and convenient for the user.

Based on the embodiment, the present invention further provides a contact information group processing device. As Fig. 7 shows, the contact information group processing device of the embodiment comprises:
an arrangement module 510 for setting up a contact interface to display a group list and a contact list corresponding to a some focus group in the contact interface in sequence. The contact group list is displayed on one side of the contact interface, and the contact list corresponding to the focus group is displayed on the other side of the contact group, i.e. it displays the contact group list and the contact list in the contact interface in sequence, the contact group list is pre-stored, and the contact list corresponds to the focus group. The focus group is the group in activation to display contacts in the group to an user. The detail has been described in the embodiment.

Preferably, the arrangement module 510 is also used for presetting up a contact database to store contact information, group information and association information (association list) corresponding to groups and contacts, and is used for pre-associating a touch drag operation gesture stored in a system with a contact group trigger command. The contact information comprises contact ID, contact name, and contact head image. The group information comprises group ID and group name. The association list of the group and the correspondent contacts comprises correspondent one-to-many relationship between the group ID and the correspondent contact ID. The detail has been described in the embodiment.

A contact control module 520 for receiving the second operation command, which the user long presses a some contact in the contact list corresponding to the focus group, to display the contact as picked by changing the display brightness of the contact after receiving the first operation command from the user to enable a contact interface. In other words, the contact control module 520 enters the contact interface according to the first operation command from the user and displays the contact in the contact list corresponding to the focus group as picked based on the second operation command from the user, whereof the first operation command is to enable the contact interface, and the second operation command is to long press the contact. The detail has been described in the embodiment.

A group control module 530 for identifying a contact targeted group according to the third operation command corresponding to touch operation gestures to move the contact to the targeted group. In the words, the group control module identifies the contact targeted group according to the third operation command and moves the contact to the targeted group, whereof the third operation command is correspondent to a drag operation gesture. The detail has been described in the embodiment.

A storage module 500 for storing the contact database and a model data corresponding to the touch drag operation gesture used for group operation.

The contact control module 520 preferably comprises:
a first control unit 521 for receiving the second operation command, which the user long presses a some contact in the contact list corresponding to the focus group, to identify the contact picked through the touch gesture after receiving the first operation command from the user to enable a contact interface. That is to say that the first control unit 521 is used for identifying the picked contact according to the second operation command, whereof the second operation command is that the user long presses a some contact in the contact list corresponding to the focus group.

A second control unit 522 for changing display brightness of the contact in the contact interface, generating a contact head image icon copy simultaneously and displaying the contact head image icon copy rotated at a predetermined angle (e.g. 45°). In other words, the second control unit 522 is used for changing display brightness of the contact in the contact interface, generating a contact head image icon copy and displaying the contact head image icon copy rotated at a predetermined angle.

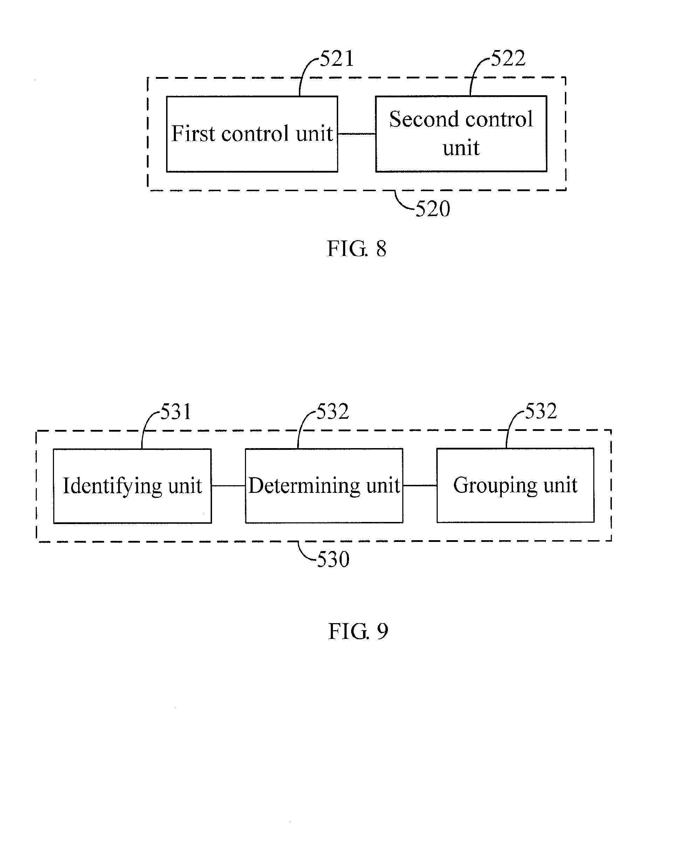

As Fig. 9 shows, the group control module 530 preferably comprises:
an identifying unit 531 for indentifying the contact targeted group according to the touch operation gesture which drags the contact, in other words, the identifying unit 531 is used for indentifying the targeted group according to the third operation command corresponding to the touch operation gesture, whereof the third operation command corresponds to the drag operation gesture which drags the contact;
a determining unit 532 for determining the targeted group to accept the contact or not. It determines the targeted group to not accept the contact if the group ID of the targeted group is equal to the group ID of the current contact group, otherwise, it determines the group to accept the contact. That is to say that the determining unit 532 is used for determining the targeted group to accept the contact or not, whereof a group identification number corresponding to the contact accepted in the targeted group is unequal to a group identification number corresponding to the current contact group; and
a grouping unit 533 for moving the contact to the targeted group when the targeted group accepts the contact. In other words, the grouping unit 533 is used for moving the contact to the targeted group when the targeted group accepts the contact.

In sum, the present invention provides a method and a device for processing contact information group. It is clear and rapid to group contacts quickly through simple touch screen drag operation gestures. It implements a series of operation to group, to change groups or to cancel to group all stored contacts, just in one operation interface. Therefore, the present invention adds a new function to a mobile phone that grouping the contacts by receiving touch screen drag operation gestures from the user. The present invention rapidly groups contacts in the same operating interface with not need to switch among interfaces. Therefore, it is simply used, high efficient and convenient for the user.

The present invention has been described with reference to certain preferred and alternative embodiments which are intended to be exemplary only and not limited to the full scope of the present invention as set forth in the appended claims.

## Claims

1. A method for processing contact information group, comprising:
setting up a contact database storing contact information, group information and a association list recording a relationship between groups and correspondent contacts;
saving model data corresponding to a drag operation gesture and associating the drag operation gesture with a contact group trigger command;
entering a contact interface according to a first operation command from an user, wherein the first operation command is used for enabling the contact interface;
displaying a contact in a contact list corresponding to a focus group as picked according to a second operation command from the user, wherein the second operation command comes from that long pressing the contact by the user; and
identifying a targeted group of the contact and moving the contact to the targeted group according to a third operation command from the user, wherein the third operation command comes from a drag operation gesture by the user;
wherein a contact group list and the contact list are displayed in the contact interface in sequence, the contact group list is pre-stored and the contact list corresponds to the focus group,
wherein the contact group list is displayed on one side of the contact interface, and the contact list corresponding to the focus group is displayed on the other side of the contact interface.

2. The method of claim 1, wherein the step of identifying the contact targeted group comprises:
identifying the targeted group according to the drag operation gesture corresponding to the third operation command, wherein the third operation command corresponds to the drag operation gesture dragging the contact by the user;
determining if the targeted group accepts the contact or not, wherein the targeted group accepts the contact when the a group identification number corresponding to the contact in the targeted group does not match a group identification number corresponding to the current contact group; and
moving the contact to the targeted group when the targeted group accepts the contact.

3. The method of claim 1, wherein the contact information comprises contact identification numbers, contact names and contact head images;
the group information comprises group identification numbers and group names;
the association list comprises a correspondent one-to-many relationship between the group identification numbers and the contact identification numbers.

4. The method of claim 1, wherein the step for displaying the contact in the contact list corresponding to the focus group as picked comprises:
identifying a contact picked by a user based on the second operation command, wherein the second operation command is that the user long presses the contact in the contact list corresponding to the focus group;
changing display brightness of the contact in the contact interface; and
generating a copy of the contact head image and displaying the copy rotated at a predetermined angle.

5. A method for processing contact information group, comprising:
entering a contact interface according to a first operation command from an user, wherein the first operation command is used for enabling the contact interface;
displaying a contact in a contact list corresponding to a focus group as picked according to a second operation command from the user, wherein the second operation command comes from that long pressing the contact by the user; and
identifying a targeted group of the contact and moving the contact to the targeted group according to a third operation command from the user, wherein the third operation command comes from a drag operation gesture by the user.

6. The method of claim 5, wherein a contact group list and the contact list are displayed in the contact interface in sequence, the contact group list is pre-stored and the contact list corresponds to the focus group.

7. The method of claim 6, wherein before a step of entering the contact interface, the method further comprises:
setting up a contact database storing contact information, group information and a association list recording a relationship between groups and correspondent contacts; and
saving model data corresponding to drag operation gestures and associating the drag operation gesture with a contact group trigger command.

8. The method of claim 7, wherein the step of identifying the contact targeted group comprises:
identifying the targeted group according to the drag operation gesture corresponding to the third operation command, wherein the third operation command corresponds to the drag operation gesture dragging the contact by the user;
determining if the targeted group accepts the contact or not, wherein the targeted group accepts the contact when the a group identification number corresponding to the contact in the targeted group does not match a group identification number corresponding to the current contact group; and
moving the contact to the targeted group when the targeted group accepts the contact.

9. The method of claim 7, wherein the contact information comprises contact identification numbers, contact names and contact head images;
the group information comprises group identification numbers and group names;
the association list comprises a correspondent one-to-many relationship between the group identification numbers and the contact identification numbers.

10. The method of claim 9, wherein the step for displaying the contact in the contact list corresponding to the focus group as picked comprises:
identifying a contact picked by a user based on the second operation command, wherein the second operation command is that the user long presses the contact in the contact list corresponding to the focus group;
changing display brightness of the contact in the contact interface; and
generating a copy of the contact head image and displaying the copy rotated at a predetermined angle.

11. The method of claim 6, wherein the contact group list is displayed on one side of the contact interface, and the contact list corresponding to the focus group is displayed on the other side of the contact interface.

12. A device for processing contact information group, comprising:
a contact control module for entering a contact interface according to a first operation command from an user and for displaying a contact in a contact list corresponding to a focus group as picked according to a second operation command from the user, wherein the first operation command is used for enabling the contact interface, and the second operation command comes from that long pressing the contact by the user; and
a group control module for identifying a targeted group of the contact and moving the contact to the targeted group according to a third operation command from the user, wherein the third operation command comes from a drag operation gesture by the user.

13. The device of claim 12, wherein a contact group list and the contact list are displayed in the contact interface in sequence, the contact group list is pre-stored and the contact list corresponds to the focus group.

14. The device of claim 13 further comprising:
an arrangement module for setting up a contact database storing contact information, group information and a association list recording a relationship between groups and correspondent contacts, for saving model data corresponding to drag operation gestures, and for associating the drag operation gesture with a contact group trigger command.

15. The device of claim 14 further comprising:
an identifying unit for identifying the targeted group according to the drag operation gesture corresponding to the third operation command, wherein the third operation command corresponds to the drag operation gesture dragging the contact by the user;
a determining unit for determining whether the targeted group accepts the contact or not, wherein the targeted group accepts the contact when the a group identification number corresponding to the contact in the targeted group does not match a group identification number corresponding to the current contact group; and
a grouping unit for moving the contact to the targeted group when the targeted group accepts the contact.

16. The device of claim 14, wherein the contact information comprises contact identification numbers, contact names and contact head images;
the group information comprises group identification numbers and group names;
the association list comprises a correspondent one-to-many relationship between the group identification numbers and the contact identification numbers.

17. The device of claim 16, wherein the contact control module comprises:
a first control unit for identifying a contact picked by a user based on the second operation command, wherein the second operation command is that the user long presses the contact in the contact list corresponding to the focus group; and
a second control unit for changing display brightness of the contact in the contact interface, and for generating a copy of the contact head image and displaying the copy rotated at a predetermined angle.

18. The device of claim 13, wherein the contact group list is displayed on one side of the contact interface, and the contact list corresponding to the focus group is displayed on the other side of the contact interface.
